# EUROPÄISCHE PATENTANMELDUNG

(11) **EP 3 358 431 A1**
(43) Veröffentlichungstag der Anmeldung: **08.08.2018**
(21) Anmeldenummer: 17154920.7
(22) Anmeldetag: 07.02.2017
(51) Int. Cl.: G05B 19/418, G05B 23/02

(54) **GANZHEITLICHE PLANUNG VON PRODUKTIONS- UND/ODER WARTUNGSPLÄNEN**

(71) Anmelder: Primetals Technologies Austria GmbH, 4031 Linz (AT); Primetals Technologies Germany GmbH, 91052 Erlangen (DE)
(72) Erfinder: Herzog, Kurt, 4073 Wilhering (AT); Winter, Günther, 91077 Neunkirchen/Brand (DE); Ankermann, Kai, 91077 Neunkirchen a.B. (DE); Haschke, Arno, 91056 Erlangen (DE); Kurka, Gerhard, 4492 Hofkirchen im Traunkreis (AT); Weinzinger, Michael, 4501 Neuhofen a. d. Krems (AT)
(74) Vertreter: Metals@Linz

(57) **Zusammenfassung**

Ein Produktionsplanungssystem (6) für eine Anlage (ANL) der Grundstoffindustrie ermittelt deren Produktionsplanungsdaten (Pi) und gibt sie dem Automatisierungssystem (1) der Anlage (ANL) vor. Ein Zustandsüberwachungssystem (7) ermittelt bisherige und zukünftig erwartete Zustände (Z1) von Komponenten der Anlage (ANL). Ein Qualitätsermittlungssystem (8) ermittelt Zustände (Z2) von von der Anlage (ANL) erzeugten und noch zu erzeugenden Ausgangsprodukten (Ai) und/oder vergangene und zukünftige Zustände (Z3) der Anlage (ANL) als Ganzes. Ein Wartungsplanungssystem (9) und/oder das Produktionsplanungssystem (6) nehmen vom Zustandsüberwachungssystem (7) die von diesem ermittelten Zustände (Z1) der Komponenten der Anlage (ANL) und vom Qualitätsermittlungssystem (8) die von diesem ermittelten Zustände (Z2, Z3) der Ausgangsprodukte (Ai) und/oder der Anlage (ANL) als Ganzes entgegen. Sie berücksichtigen bei der Ermittlung von Wartungsplanungsdaten (W) und/oder der Produktionsplanungsdaten (Pi) die vom Zustandsüberwachungssystem (7) und vom Qualitätsermittlungssystem (8) entgegengenommenen Daten.

## Beschreibung

### Gebiet der Technik

Die vorliegende Erfindung geht aus von einem Verfahren zur Planung von Produktion und/oder Wartung von Anlagen der Grundstoffindustrie,
- wobei die Anlage der Grundstoffindustrie von einem Automatisierungssystem gesteuert wird und unter Steuerung durch das Automatisierungssystem eine Abfolge von Produktionsaufträgen abarbeitet, wobei die Anlage der Grundstoffindustrie pro Produktionsauftrag aus einer Anzahl von Eingangsprodukten eine Anzahl von Ausgangsprodukten erzeugt,
- wobei das Produktionsplanungssystem mit einem Zeithorizont von zumindest mehreren Tagen Produktionsplanungsdaten ermittelt, die festlegen, zu welchen Zeitpunkten der Anlage der Grundstoffindustrie welche Eingangsprodukte zugeführt werden sollen, welche Ausgangsprodukte von der Anlage der Grundstoffindustrie aus den Eingangsprodukten erzeugt werden sollen und zu welchen Zeitpunkten die Ausgangsprodukte von der Anlage der Grundstoffindustrie erzeugt werden sollen,
- wobei das Produktionsplanungssystem die Produktionsplanungsdaten dem Automatisierungssystem vorgibt,
- wobei ein Zustandsüberwachungssystem von dem Automatisierungssystem und/oder über Sensoreinrichtungen direkt von der Anlage der Grundstoffindustrie Messdaten und/oder aus den Messdaten abgeleitete Daten entgegennimmt, daraus die bisherigen Zustände von Komponenten der Anlage der Grundstoffindustrie ermittelt und weiterhin unter zusätzlicher Verwertung der Produktionsplanungsdaten oder aus den Produktionsplanungsdaten abgeleiteter Daten zukünftig erwartete Zustände der Komponenten der Anlage der Grundstoffindustrie ermittelt,
- wobei ein von dem Automatisierungssystem verschiedenes Qualitätsermittlungssystem von dem Automatisierungssystem und/
   oder über Sensoreinrichtungen direkt von der Anlage der Grundstoffindustrie Messdaten und/oder aus den Messdaten abgeleitete Daten entgegennimmt und daraus die Zustände der von der Anlage der Grundstoffindustrie erzeugten Ausgangsprodukte ermittelt,
- wobei ein Wartungsplanungssystem unter Berücksichtigung von erwarteten Zuständen der Komponenten der Anlage der Grundstoffindustrie Wartungsplanungsdaten für die Anlage der Grundstoffindustrie ermittelt.
Die vorliegende Erfindung geht weiterhin aus von einem System zur Planung von Produktion und/oder Wartung von Anlagen der Grundstoffindustrie,
- wobei die Anlage der Grundstoffindustrie von einem Automatisierungssystem gesteuert wird und unter Steuerung durch das Automatisierungssystem eine Abfolge von Produktionsaufträgen abarbeitet, wobei die Anlage der Grundstoffindustrie pro Produktionsauftrag aus einer Anzahl von Eingangsprodukten eine Anzahl von Ausgangsprodukten erzeugt,
- wobei das System ein Produktionsplanungssystem, ein Zustandsüberwachungssystem, ein von dem Automatisierungssystem verschiedenes Qualitätsermittlungssystem und ein Wartungsplanungssystem aufweist,
- wobei das Produktionsplanungssystem, das Zustandsüberwachungssystem, das Qualitätsermittlungssystem und das Wartungsplanungssystem derart programmiert sind, dass sie zusammen ein derartiges Verfahren zur Planung von Produktion und/oder Wartung von Anlagen der Grundstoffindustrie ausführen.

### Stand der Technik

Aus der WO 2012/025 438 A1 ist ein Verfahren zum Betreiben einer Anlage der Grundstoffindustrie bekannt. Bei der Anlage handelt es sich um ein Walzwerk. Die Anlage der Grundstoffindustrie wird von einem Automatisierungssystem gesteuert. Sie arbeitet unter Steuerung durch das Automatisierungssystem eine vorgegebene Abfolge von Produktionsaufträgen ab. Pro Produktionsauftrag erzeugt die Anlage der Grundstoffindustrie aus einer Anzahl von Eingangsprodukten eine Anzahl von Ausgangsprodukten. Ein Zustandsüberwachungssystem nimmt von dem Automatisierungssystem und/oder über Sensoreinrichtungen direkt von der Anlage der Grundstoffindustrie Messdaten und/
oder aus den Messdaten abgeleitete Daten entgegen. Es ermittelt daraus die bisherigen Zustände von Komponenten der Anlage der Grundstoffindustrie und weiterhin unter zusätzlicher Verwertung von Produktionsplanungsdaten oder aus den Produktionsplanungsdaten abgeleiteter Daten zukünftig erwartete Zustände der Komponenten der Anlage der Grundstoffindustrie. Bei den Komponenten der Anlage der Grundstoffindustrie handelt es sich um die Walzen von Walzgerüsten des Walzwerks. Bei den ermittelten Zuständen handelt es sich um den Verschleiß der Walzgerüste. Überschreitet der Verschleiß ein vorbestimmtes Maß, wird eine Alarmmeldung an eine Bedienperson ausgegeben.

Aus dem Fachaufsatz "Development of Computerized Facility Maintenance Management System Based on Reliability Centred Maintenance and Automated Data Gathering" von JaeHoon Lee et al. , International Journal of Control and Automation, Vol. 6, No. 1, February, 2013, Seiten 1 bis 12, ist bekannt, ein Zustandsüberwachungssystem und ein Wartungsplanungssystem miteinander zu koppeln.

Anlagen der Grundstoffindustrie - insbesondere der metallerzeugenden Industrie wie hüttentechnische Anlagen - ist oftmals ein Produktionsplanungssystem zugeordnet, in der Regel als PPS = production planning system bezeichnet. Ein Produktionsplanungssystem ist eine Recheneinrichtung, der Primäraufträge zugeführt werden. Die Primäraufträge umfassen jeweils technische und logistische Auftragsdaten. Die technischen Auftragsdaten legen fest, welches Ausgangsprodukt von der Anlage der Grundstoffindustrie jeweils erzeugt werden soll. Die logistischen Auftragsdaten legen fest, bis zu welchem Termin der entsprechende Auftrag abgearbeitet werden muss oder soll. Das Produktionsplanungssystem ermittelt anhand der Primäraufträge Produktionsplanungsdaten. Die Produktionsplanungsdaten legen fest, zu welchen Zeitpunkten der Anlage der Grundstoffindustrie welche Eingangsprodukte zugeführt werden sollen. Sie legen weiterhin fest, welche Ausgangsprodukte von der Anlage der Grundstoffindustrie aus den Eingangsprodukten erzeugt werden sollen. Sie legen weiterhin fest, zu welchen Zeitpunkten die Ausgangsprodukte von der Anlage der Grundstoffindustrie erzeugt werden sollen. Das Produktionsplanungssystem führt die Ermittlung der Produktionsplanungsdaten mit einem relativ großen Zeithorizont aus. Der Zeithorizont beträgt in der Regel zumindest mehrere Tage, oftmals sogar mehrere Wochen oder Monate.

Derartige Produktionsplanungssysteme sind bekannt. Rein beispielhaft wird auf die DE 100 47 381 A1 verwiesen. Auch die Fachaufsätze "Time management at the BOF meltshop 2 of thyssenkrupp Steel in Beeckerwerth", stahl und eisen 136 (2016), Nummer 3, Seiten 51 bis 57, und "Integrierte Produktionsplanung - Energie- und Ressourceneffizienz weiter gedacht", stahl und eisen 136 (2016), Nummer 5, Seiten 69 bis 73, sind in diesem Zusammenhang zu nennen. Weiterhin sind derartige Produktionsplanungssysteme auch von verschiedenen Herstellern am Markt erhältlich. Beispielsweise wird ein derartiges Produktionsplanungssystem von der Firma PSI Metals GmbH, Heinrichstraße 83-85, 40239 Düsseldorf, Deutschland, angeboten. Es kann rein beispielhaft auf den Prospekt "PSImetals Planning - Production Management Solutions for the Metals Industry" der genannten Firma aus dem Juli 2014 verwiesen werden.

Anlagen der Grundstoffindustrie - insbesondere der metallerzeugenden Industrie - ist weiterhin oftmals ein Wartungsplanungssystem zugeordnet, in der Regel als CMMS = computerized maintenance monitoring system bezeichnet. Ein Wartungsplanungssystem ist eine Recheneinrichtung, die unter Berücksichtigung von erwarteten Zustände der Komponenten der Anlage der Grundstoffindustrie Wartungsplanungsdaten für die Anlage der Grundstoffindustrie ermittelt. Die Wartungsplanungsdaten umfassen die im einzelnen vorzunehmenden Maßnahmen, um bestimmte Wartungsvorgänge vornehmen zu können. Das Wartungsplanungssystem legt fest, welche Maßnahmen zu welchem Zeitpunkt ergriffen werden müssen und welche Vorbereitungen hierfür zutreffen sind.

Derartige Wartungsplanungssystem sind bekannt. Rein beispielhaft wird auf das Wartungsplanungssystem MAXIMO verwiesen, das von der IBM Corporation, Software Group, Route 100, Somers, NY 10589, USA, angeboten wird. Das System wird auch als Asset Performance Management System bezeichnet. Ein Wartungsplanungssystem ist auch in dem Prospekt "PREDIX - The Industrial Internet Platform" der General Electric Company vom November 2016 (siehe dort insbesondere Seite 23) beschrieben.

Der Anlage der Grundstoffindustrie ist weiterhin oftmals ein Qualitätsermittlungssystem zugeordnet, in der Regel als QMS = quality management system bezeichnet, in manchen Fällen auch als TPQC = through process quality control bezeichnet. Ein Qualitätsermittlungssystem ist ebenfalls eine Recheneinrichtung. Die Recheneinrichtung kann in Echtzeit arbeiten. Sie muss aber nicht in Echtzeit arbeiten. Sie ist ein von dem Automatisierungssystem verschiedenes System. Das Qualitätsermittlungssystem nimmt von dem Automatisierungssystem und/oder über Sensoreinrichtungen direkt von der Anlage der Grundstoffindustrie Messdaten und/oder aus den Messdaten abgeleitete Daten entgegen. Es ermittelt - gegebenenfalls unter zusätzlicher Berücksichtigung der zugehörigen Produktionsplanungsdaten - den jeweiligen Zustand des von der Anlage der Grundstoffindustrie jeweils erzeugten Ausgangsprodukts und ordnet diesen Zustand dem jeweiligen Ausgangsprodukt zu. Beispielsweise werden bei einer Stranggießanlage als Anlage der Grundstoffindustrie der jeweils gegossenen Bramme (= jeweiliges Ausgangsprodukt) die Abmessungen, die Schwankungen der Abmessungen und die chemische Zusammensetzung zugeordnet. Bei einem Walzwerk können einem fertig gewalzten Produkt ebenfalls dessen Abmessungen und die Schwankungen der Abmessungen zugeordnet werden. Weiterhin können dem fertig gewalzten Produkt mechanische Eigenschaften beschreibende Parameter zugeordnet werden, beispielsweise die Dehngrenze und dergleichen mehr.

Derartige Qualitätsermittlungssysteme sind ebenfalls bekannt. Rein beispielhaft wird auf den Fachaufsatz "TPQC - Through Process Quality Control" von Gerhard Kurka und Gerald Hohenbichler, Proceedings zum 9. China International Steel Congress, China Iron&Steel Association, Beijing 2016, Seiten 1057 bis 1064, verwiesen. Ein weiteres Qualitätsermittlungssystem ist beispielsweise in dem Fachaufsatz "All about Quality: Operational Know-how Combined with a New Generation of Product Quality Assessment" von J. Kempken et al., Proceedings zur 9. China International Steel Congress, China Iron & Steel Association, Beijing 2016, Seiten 973 bis 978, beschrieben.

Die Produktionsplanung erfolgt aufgrund des Zeithorizonts lange vor der tatsächlichen Ausführung der einzelnen Produktionsaufträge. Sie kann daher nur auf der vermuteten oder erwarteten Verfügbarkeit der Anlage der Grundstoffindustrie sowie auf vermuteten oder erwarteten Zuständen von Komponenten der Anlage der Grundstoffindustrie basieren. In der Praxis ergeben sich während des Betriebs der Anlage der Grundstoffindustrie jedoch immer wieder Störungen. Manche dieser Störungen sind unkritisch. Andere Störungen führen dazu, dass die Produktionsplanung angepasst werden muss.

Wenn die Produktionsplanung angepasst werden muss, wird die Anpassung oftmals von Menschen vorgenommen. Es ist jedoch auch bereits bekannt, eine automatische Anpassung vorzunehmen, siehe die bereits erwähnte DE 100 47 381 A1. Auch im Falle einer automatischen Anpassung der Produktionsplanung erfolgt die Eingabe der geänderten Bedingungen, auf denen die dann geänderte Planung beruht, jedoch manuell. Eine automatische oder automatisierte Berücksichtigung von Zuständen von Komponenten der Anlage der Grundstoffindustrie oder von erreichten oder erreichbaren Zuständen von Ausgangsprodukten erfolgt im Stand der Technik nicht. Auch erfolgt keine automatische oder automatisierte Berücksichtigung der Wartungsplanungsdaten. Wenn überhaupt eine Berücksichtigung erfolgt, sind hierfür manuelle Eingaben erforderlich. Insbesondere Umplanungen, die aufgrund von unvorhergesehenen Störungen der Anlage der Grundstoffindustrie oder anderen unerwarteten Ereignissen erforderlich sind, sind daher oftmals nur suboptimal.

In ähnlicher Weise arbeitet auch das Wartungsplanungssystem. Insbesondere basiert die Planung der Wartung auf Erfahrungswerten und Schätzungen, die nicht mit tatsächlichen Zuständen von Komponenten der Anlage der Grundstoffindustrie oder von erreichten oder erreichbaren Zuständen von Ausgangsprodukten abgeglichen werden oder anhand derartiger Zustände nachgeführt und aktualisiert werden. Auch erfolgt kein automatischer oder automatisierter Abgleich mit den Produktionsplanungsdaten. Wenn überhaupt eine Berücksichtigung erfolgt, sind hierfür manuelle Eingaben erforderlich. Auch hier ist das Ergebnis der Wartungsplanung oftmals nur suboptimal.

Informationen über den tatsächlichen Zustand von Komponenten der Anlage der Grundstoffindustrie sind im Zustandsüberwachungssystem (CMS = condition monitoring system) vorhanden. Das Zustandsüberwachungssystem überwacht im Stand der Technik die Komponenten der Anlage der Grundstoffindustrie. Wenn bestimmte, vorgegebene Grenzwerte erreicht oder überschritten werden, wird ein Alarm ausgelöst. Die Grenzwerte, bei denen ein Alarm ausgelöst wird, sind dem Zustandsüberwachungssystem im Stand der Technik fest vorgegeben. Eine Weiterleitung der im Zustandsüberwachungssystem vorhandenen Daten an das Produktionsplanungssystem ist nicht vorgesehen.

Informationen über den tatsächlichen Zustand der Anlage der Grundstoffindustrie als Ganzes (das heißt den Prozesszustand) und über die Zustände von mittels der Anlage der Grundstoffindustrie erzeugten Ausgangsprodukten (und teilweise auch von Zwischenprodukten) können im Qualitätsermittlungssystem vorhanden sein. Das Qualitätsermittlungssystem ist jedoch in der Regel nicht oder zumindest nicht vollständig mit dem Wartungsplanungssystem, dem Produktionsplanungssystem und dem Zustandsüberwachungssystem gekoppelt. Eine etwaige Kopplung erfolgt im Stand der Technik durch manuelle Eingaben des Bedieners.

Die manuellen Eingaben durch den Bediener erfordern eine große Erfahrung. Dennoch sind die Ergebnisse oftmals nicht optimal, insbesondere deshalb, weil derartige Umplanungen oftmals unter erheblichem Zeitdruck erfolgen müssen. Auch eine Planung auf der Basis von Erfahrungswerten ist nicht optimal, da zum einen mit gewissen Sicherheitszuschlägen gearbeitet werden muss und zum anderen aktuelle Zustände der Anlage der Grundstoffindustrie nicht berücksichtigt werden können.

### Zusammenfassung der Erfindung

Die Aufgabe der vorliegenden Erfindung besteht darin, Möglichkeiten zu schaffen, mittels derer eine optimale Produktionsplanung und/oder eine optimale Wartungsplanung möglich sind.

Die Aufgabe wird durch ein Verfahren zur Planung von Produktion und/oder Wartung von Anlagen der Grundstoffindustrie mit den Merkmalen des Anspruchs 1 gelöst. Vorteilhafte Ausgestaltungen des Verfahrens sind Gegenstand der abhängigen Ansprüche 2 bis 12.

Erfindungsgemäß wird ein Verfahren zur Planung von Produktion und/oder Wartung von Anlagen der Grundstoffindustrie der eingangs genannten Art dadurch ausgestaltet,
- dass das Qualitätsermittlungssystem vom Zustandsüberwachungssystem die bisherigen und die zukünftig erwarteten Zustände der Komponenten der Anlage der Grundstoffindustrie entgegennimmt und vom Produktionsplanungssystem oder vom Automatisierungssystem die Produktionsplanungsdaten entgegennimmt, die bisherigen Zustände der Komponenten der Anlage der Grundstoffindustrie und die zugehörigen Produktionsplanungsdaten bei der Ermittlung der Zustände der von der Anlage der Grundstoffindustrie erzeugten Ausgangsprodukte berücksichtigt und weiterhin aus den übermittelten Daten die Zustände der von der Anlage der Grundstoffindustrie zu erzeugenden Ausgangsprodukte ermittelt und/oder vergangene und zukünftige Zustände der Anlage der Grundstoffindustrie als Ganzes ermittelt,
- wobei ein Wartungsplanungssystem vom Zustandsüberwachungssystem die bisherigen und die zukünftig erwarteten Zustände der Komponenten der Anlage der Grundstoffindustrie entgegennimmt und vom Qualitätsermittlungssystem die Zustände der von der Anlage der Grundstoffindustrie erzeugten Ausgangsprodukte und der zu erzeugenden Ausgangsprodukte und/oder vergangene und zukünftige Zustände der Anlage der Grundstoffindustrie als Ganzes entgegennimmt und die Wartungsplanungsdaten für die Anlage der Grundstoffindustrie unter Berücksichtigung dieser Daten ermittelt und/oder das Produktionsplanungssystem vom Zustandsüberwachungssystem die bisherigen und die zukünftig erwarteten Zustände der Komponenten der Anlage der Grundstoffindustrie entgegennimmt und vom Qualitätsermittlungssystem die Zustände der von der Anlage der Grundstoffindustrie erzeugten Ausgangsprodukte und der zu erzeugenden Ausgangsprodukte und/oder vergangene und zukünftige Zustände der Anlage der Grundstoffindustrie als Ganzes entgegennimmt und bei der Ermittlung der Produktionsplanungsdaten berücksichtigt.

Bei der Anlage der Grundstoffindustrie kann es sich beispielsweise um eine Anlage der Stahlindustrie oder eine Anlage der metallerzeugenden Industrie handeln. Beispiele derartiger Anlagen sind eine Anlage zur Eisenerzeugung wie beispielsweise ein Hochofen oder eine Direktreduktionsanlage. Weitere Anlagen sind beispielsweise nachgeordnete Einrichtungen, in denen aus Roheisen Stahl erzeugt wird. Beispiele derartiger Anlagen sind ein Lichtbogenofen, ein Konverter und Anlagen, in denen Pfannenprozesse erfolgen, wie beispielsweise eine Vakuumbehandlungsanlage. Weitere Anlagen sind der Stahlerzeugung nachgeordnete Einrichtungen, in denen ein Urformen des Metalls und ein Umformen des urgeformten Metalls erfolgen. Beispiele derartiger Anlagen sind eine Stranggießanlage und Walzwerke. Bei den Walzwerken kann es sich beispielsweise um ein Walzwerk zum Walzen eines flachen Walzguts wie beispielsweise eine Vorstraße, eine Fertigstraße, ein Steckelwalzwerk und andere mehr handeln. Weiterhin kann es sich bei den Walzwerken um ein Walzwerk zum Walzen eines anderen Querschnitts handeln, beispielsweise eines Knüppelquerschnitts. Bei dem Walzwerk kann es sich alternativ um ein Walzwerk zum Warmwalzen von Metall, ein Walzwerk zum Kaltwalzen von Metall oder ein kombiniertes Walzwerk handeln, in dem das Metall zunächst warm- und sodann kaltgewalzt wird. Auch eine Kühlstrecke - gegebenenfalls in Kombination mit einem Walzwerk - kann als Anlage der Stahlerzeugung angesehen werden. Auch andere einem Walzwerk vor- oder nachgeordnete Anlagen kommen in Frage, beispielsweise eine Glühe oder eine Beize.

Anlagen der Grundstoffindustrie verfügen in aller Regel über eine Prozessautomatisierung. Die Prozessautomatisierung umfasst meist mehrere Levels. Level 0 wird von der Sensorik und der Aktorik gebildet. Level 1 ist die sogenannte Basisautomatisierung, welche die Regelkreise implementiert. Level 2 enthält die technologische Automatisierung, welche die Prozessmodelle umfasst und die Sollwerte für die Regelkreise von Level 1 ermittelt. Das Automatisierungssystem der vorliegenden Erfindung umfasst die Level 0, 1 und 2.

Die Vorgabe der Produktionsplanungsdaten an das Automatisierungssystem kann direkt erfolgen. Alternativ kann eine indirekte Vorgabe über ein Manufacturing Execution System (= MES) erfolgen. Ein MES ist ein Fertigungsleitsystem. Ein MES kann intern als Modul ein CMMS, ein PPS und/oder ein QMS enthalten. Manufacturing Execution Systeme sind Fachleuten allgemein bekannt. Rein beispielhaft wird auf die Broschüre "Manufacturing Execution Systems - Branchenspezifische Anforderungen und herstellerneutrale Beschreibung von Lösungen", herausgegeben vom Zentralverband Elektrotechnik- und Elektronikindustrie e.V. (ZVEI), ISBN 978-3-00-031362-2 verwiesen. In dieser Broschüre findet sich ein Überblick über MES und auch eine Auflistung verschiedener Anbieter, von denen MES angeboten werden. Insbesondere die Firma PSI Metals GmbH bietet auch automatisch arbeitende MES für Anlagen der Grundstoffindustrie an. Es kann rein beispielhaft auf den Prospekt "PSImetals- Production Management Solutions for Metals Industries" der genannten Firma aus dem März 2015 verwiesen werden. Das MES wird dort als Production Management Solution (PMS) bezeichnet.

In einer bevorzugten Ausgestaltung der vorliegenden Erfindung nimmt das Wartungsplanungssystem vom Produktionsplanungssystem die Produktionsplanungsdaten entgegen und berücksichtigt die Produktionsplanungsdaten bei der Ermittlung der Wartungsplanungsdaten und/oder nimmt das Produktionsplanungssystem vom Wartungsplanungssystem die Wartungsplanungsdaten entgegen und berücksichtigt die Wartungsplanungsdaten bei der Ermittlung der Produktionsplanungsdaten. Es erfolgt also eine mindestens einseitige Abstimmung von Produktionsplanungssystem und Wartungsplanungssystem, vorzugsweise sogar eine gegenseitige Abstimmung. Dadurch kann eine noch weitergehende Optimierung erfolgen. Beispielsweise können Wartungen gezielt in Zeiträume gelegt werden, zu denen aufgrund der Produktionsplanung sowieso ein Anlagenstillstand vorgesehen ist. Alternativ oder zusätzlich können beispielsweise Produktionsaufträge, für die ein besonders hohes Qualitätsniveau erforderlich ist, auf Zeitpunkte unmittelbar nach Wartungsmaßnahmen gelegt werden, wenn also noch neue, unverschlissene Anlagenkomponenten zur Verfügung stehen. In umgekehrter Weise können natürlich auch Produktionsaufträge, für die kein besonders hohes Qualitätsniveau erforderlich ist, auf Zeiträume lange nach den letzten Wartungsmaßnahmen gelegt werden.

In einer weiter bevorzugten Ausgestaltung ist vorgesehen, dass das Qualitätsermittlungssystem unter Berücksichtigung der Produktionsplanungsdaten und/oder der zukünftig erwarteten Zustände der Komponenten der Anlage der Grundstoffindustrie Grenzwerte für dynamische Einstellungen und/oder Grenzwerte für sich ergebende Zustände der Komponenten der Anlage der Grundstoffindustrie ermittelt und dass das Qualitätsermittlungssystem die Grenzwerte für die dynamischen Einstellungen dem Automatisierungssystem und/oder die Grenzwerte für die sich ergebenden Zustände dem Zustandsüberwachungssystem als einzuhaltende Grenzwerte vorgibt. Dadurch können beispielsweise die Grenzwerte, die vom Zustandsüberwachungssystem auf Einhaltung überwacht werden, (beispielsweise der zulässige Verschleiß) je nach herzustellendem Ausgangsprodukt dynamisch angepasst werden. Gleiches gilt für die Grenzwerte für die dynamischen Einstellungen der Komponenten der Anlage der Grundstoffindustrie, beispielsweise im Falle eines Walzwerks zum Walzen von Metallband für maximale Walzkräfte, maximale Rückbiegekräfte und andere mehr.

Die dynamische Ermittlung der Grenzwerte für dynamische Einstellungen und/oder der Grenzwerte für sich ergebende Zustände der Komponenten der Anlage der Grundstoffindustrie kann dadurch noch weiter optimiert werden, dass das Wartungsplanungssystem die Wartungsplanungsdaten an das Qualitätsermittlungssystem übermittelt und das Qualitätsermittlungssystem bei der Ermittlung der Grenzwerte auch die Wartungsplanungsdaten berücksichtigt. Beispielsweise kann, wenn bestimmte Einstellungen einer bestimmten Komponente der Anlage der Grundstoffindustrie einen relativ hohen Verschleiß verursachen, dies hingenommen werden, wenn in Bälde eine Wartungsmaßnahme vorgesehen ist. Wenn hingegen erst zu einem späteren Zeitpunkt die Wartungsmaßnahme vorgesehen ist, kann es ratsam sein, die Komponente mehr zu schonen.

In der Regel wird die Anlage der Grundstoffindustrie im Rahmen der Herstellung eines jeweiligen Ausgangsprodukts während einer jeweiligen Zeitspanne von maximal wenigen Stunden betrieben. Ein Zyklus eines Lichtbogenofens dauert beispielsweise rund 1 Stunde. In ähnlicher Weise wird zum Aufheizen und Walzen einer jeweiligen Bramme in einem Walzwerk maximal ein Zeitraum von 2 bis 3 Stunden benötigt. Für eine einzelne Iteration benötigen das Produktionsplanungssystem und das Wartungsplanungssystem oftmals nur eine Zeitspanne, die in diesem Bereich liegt. Vorzugsweise wird das erfindungsgemäße Verfahren zur Planung von Produktion und/oder Wartung von Anlagen der Grundstoffindustrie daher automatisiert iterativ ausgeführt. Dadurch ist es möglich, das erfindungsgemäße Verfahren zur Planung von Produktion und/oder Wartung quasi in Echtzeit auszuführen. Der Begriff "Echtzeit" ist hierbei auf die Zeitkonstanten der Anlage der Grundstoffindustrie bezogen, nicht auf einen Zeittakt im Millisekundenbereich, mit dem die Anlage der Grundstoffindustrie von dessen Automatisierungssystem gesteuert wird.

Es ist möglich, dass das Verfahren zur Planung von Produktion und/oder Wartung kontinuierlich ausgeführt wird. Alternativ ist es möglich, dass das Verfahren auf Anforderung durch eine Person ("auf Knopfdruck") ausgeführt wird.

Es ist möglich, die Recheneinrichtung zur Implementierung des Verfahrens vor Ort anzuordnen. Ebenso ist auch eine Anordnung an einem anderen Ort möglich. Es ist sogar eine Implementierung in einer Cloud möglich.

In vielen Fällen dient das Ausgangsprodukt der Anlage der Grundstoffindustrie seinerseits als Eingangsprodukt für eine weitere Anlage der Grundstoffindustrie. Beispielsweise wird zunächst (flüssiges) Eisen hergestellt, dann das Eisen in (flüssigen) Stahl umgewandelt, dann der (flüssige) Stahl einem Behandlungsprozess unterzogen, dann der (flüssige) Stahl gegossen, dann der erstarrte Stahlstrang warmgewalzt und schließlich der warmgewalzte Stahlstrang kaltgewalzt. Jeder dieser Prozessschritte erfolgt in einer jeweiligen Anlage der Grundstoffindustrie, beispielsweise einem Hochofen, einem Konverter, einer Vakuumbehandlungsanlage, einer Stranggießanlage, einem Warmwalzwerk und einem Kaltwalzwerk.

Vorzugsweise ermittelt das Qualitätsermittlungssystem anhand des Zustands eines der von der Anlage der Grundstoffindustrie erzeugten Ausgangsprodukte für eine weitere Anlage der Grundstoffindustrie, der das erzeugte Ausgangsprodukt als Eingangsprodukt zugeführt wird und die damit ein weiterverarbeitetes Produkt erzeugt, Schranken für die Behandlung dieses Ausgangsprodukts in der weiteren Anlage der Grundstoffindustrie und gibt die Schranken einem Automatisierungssystem oder einem Produktionsplanungssystem für die weitere Anlage der Grundstoffindustrie vor. Eine Vorgabe an das Automatisierungssystem für die weitere Anlage der Grundstoffindustrie ist insbesondere dann sinnvoll, wenn das Produktionsplanungssystem übergreifend sowohl für die Anlage der Grundstoffindustrie als auch für die weitere Anlage der Grundstoffindustrie die Produktionsplanungsdaten ermittelt.

Beispielsweise kann bei dem obenstehend erläuterten Prozess die chemische Zusammensetzung des Stahls nach der Erzeugung aus Eisen dazu verwendet werden, die Mengen an Zuschlagstoffen zu ermitteln, die dem Stahl im nachfolgenden Behandlungsprozess zugeführt werden müssen, damit der Stahl bestimmte Eigenschaften aufweist. Auch können beispielsweise dann, wenn nach dem Warmwalzen ein bestimmtes Profil und eine bestimmte Planheit des gewalzten Bandes festgestellt werden, Grenzen von Prozessgrößen für den nachfolgenden Kaltwalzvorgang ermittelt werden, damit das kaltgewalzte Band sich nicht wellt.

In Ausgestaltung dieser Vorgehensweise ist es insbesondere möglich, dass das Qualitätsermittlungssystem
- anhand des Zustands eines der von der Anlage der Grundstoffindustrie erzeugten Ausgangsprodukte prüft, ob dieses Ausgangsprodukt für dieses Ausgangsprodukt vordefinierte Qualitätsparameter einhält,
- bei Einhalten der vordefinierten Qualitätsparameter durch dieses Ausgangsprodukt eine bereits geplante Weiterverarbeitung dieses Ausgangsprodukts durch die weitere Anlage der Grundstoffindustrie freigibt und
- bei Nichteinhalten der vordefinierten Qualitätsparameter durch dieses Ausgangsprodukt zusätzlich zu den Schranken für die Behandlung dieses Ausgangsprodukts in der weiteren Anlage der Grundstoffindustrie unter Berücksichtigung der tatsächlichen Qualitätsparameter dieses Ausgangsprodukts eine modifizierte Weiterverarbeitung durch die weitere Anlage der Grundstoffindustrie ermittelt.

Die Einhaltung der vordefinierten Qualitätsparameter kann beispielsweise erforderlich sein, um im Rahmen der geplanten Weiterverarbeitung dieses Ausgangsprodukts ein weiteres Ausgangsprodukt zu erzeugen, das seinerseits definierte Qualitätsparameter einhält. Wenn der Zustand des jeweiligen Ausgangsprodukts die Erzeugung des vordefinierten weiteren Ausgangsprodukts zulässt, werden die Schranken vom Qualitätsermittlungssystem entsprechend ermittelt. Wenn der Zustand des jeweiligen Ausgangsprodukts die Erzeugung des vordefinierten weiteren Ausgangsprodukts nicht zulässt, muss zunächst ermittelt werden, ob und gegebenenfalls welches weitere Ausgangsprodukt durch die weitere (oder eine andere) Anlage der Grundstoffindustrie noch erzeugt werden kann. Für dieses weitere, jetzt noch herstellbare Produkt ermittelt das Qualitätsermittlungssystem dann die zugehörigen Schranken für die Bearbeitung durch die weitere (bzw. andere) Anlage der Grundstoffindustrie. Dies kann beispielsweise mit der Herstellung eines weiteren Ausgangsprodukts mit reduzierten Qualitätsanforderungen einhergehen.

Es ist sogar möglich, dass das die vordefinierten Qualitätsparameter nicht einhaltende Ausgangsprodukt einer anderen Anlage der Grundstoffindustrie zugeführt wird als diejenige Anlage, der es bei Einhaltung der vordefinierten Qualitätsparameter zugeführt wird. Je nach Lage des Einzelfalls können dadurch die vordefinierten Qualitätsparameter doch noch eingehalten werden.

Vorzugsweise übermittelt das Qualitätsermittlungssystem die modifizierte Weiterverarbeitung an das Produktionsplanungssystem und berücksichtigt das Produktionsplanungssystem die modifizierte Weiterverarbeitung im Rahmen der Ermittlung der Produktionsplanungsdaten. Dadurch kann die Ermittlung der Produktionsplanungsdaten stets auf dem aktuellen Stand sein.

Aufgrund des jeweiligen Eingangsprodukts und der Betriebsparameter der Anlage der Grundstoffindustrie wird ein gewisses Ergebnis des jeweiligen Ausgangsprodukts erwartet. Es ist möglich, dass dem Qualitätsermittlungssystem dieses erwartete Ergebnis bekannt ist. Beispielsweise kann das Ergebnis einer Modellrechnung dem Qualitätsermittlungssystem zugeführt werden oder kann das Qualitätsermittlungssystem selbst eine derartige Modellrechnung durchführen. Andererseits kann ein tatsächlicher Zustand des jeweiligen, von der Anlage der Grundstoffindustrie erzeugten Ausgangsprodukts von diesem erwarteten Zustand abweichen. Mögliche Ursachen sind Fehler im Modell, nicht erkannte Fehlfunktionen, nicht erkannte Störungen und andere mehr. Vorzugsweise führt das Qualitätsermittlungssystem bei einer Abweichung des (tatsächlichen) Zustands des jeweiligen Ausgangsprodukts von einem erwarteten Zustand eine Analyse der Zustände der Komponenten der Anlage der Grundstoffindustrie und/oder von Betriebsparametern der Anlage der Grundstoffindustrie durch. Die Analyse kann insbesondere der Auffindung der Ursache für die Abweichung des Zustands vom erwarteten Zustand dienen.

Das Zustandsüberwachungssystem übermittelt bei Erreichen von Grenzwerten durch die bisherigen oder zukünftig erwarteten Zustände der Komponenten der Anlage der Grundstoffindustrie entsprechende Meldungen an das Wartungsplanungssystem. In einer bevorzugten Ausgestaltung werden die Grenzwerte unter Berücksichtigung der Produktionsplanungsdaten ermittelt. Dadurch können die Grenzwerte dynamisch sein.

Vorzugsweise optimiert das Produktionsplanungssystem die Produktionsplanungsdaten mit dem Ziel, eine Betriebszeit der Anlage der Grundstoffindustrie zu maximieren. Dadurch kann die Produktivität der Anlage der Grundstoffindustrie maximiert werden.

Die Aufgabe wird weiterhin durch ein System zur Planung von Produktion und/oder Wartung von Anlagen der Grundstoffindustrie mit den Merkmalen des Anspruchs 13 gelöst. Erfindungsgemäß wird ein System zur Planung von Produktion und/oder Wartung von Anlagen der Grundstoffindustrie der eingangs genannten Art dadurch ausgestaltet, dass das Produktionsplanungssystem, das Zustandsüberwachungssystem, das Qualitätsermittlungssystem und das Wartungsplanungssystem derart programmiert sind, dass sie zusammen ein erfindungsgemäßes Verfahren zur Planung von Produktion und/oder Wartung von Anlagen der Grundstoffindustrie ausführen.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Gesamtübersicht über Recheneinrichtungen,
- FIG 2: ein Produktionsplanungssystem,
- FIG 3: eine Anlage der Grundstoffindustrie und
- FIG 4: eine Gruppe von Anlagen der Grundstoffindustrie.

### Beschreibung der Ausführungsformen

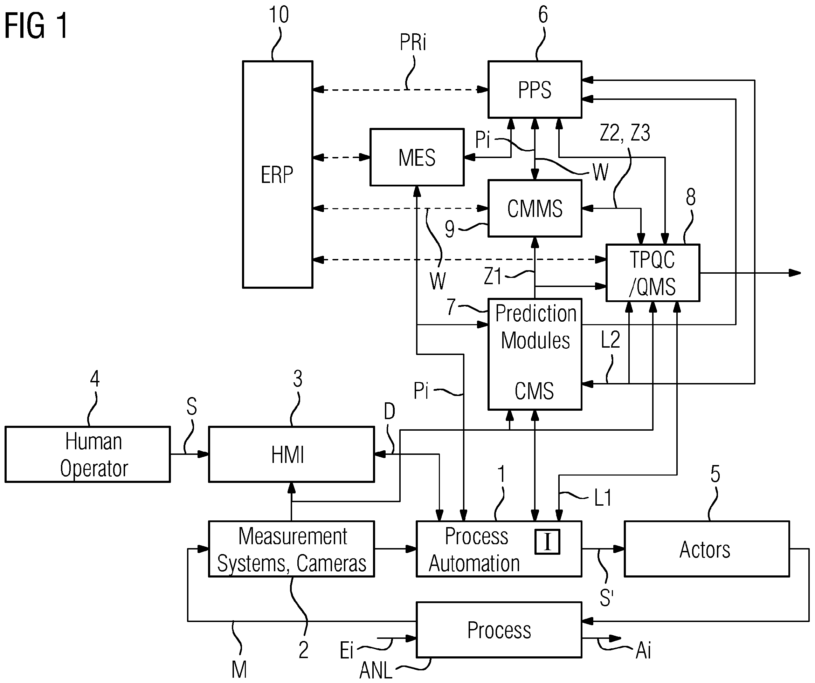

Gemäß FIG 1 weist eine Anlage ANL der Grundstoffindustrie ein Automatisierungssystem 1, Sensoreinrichtungen 2 und eine Mensch-Maschine-Schnittstelle 3 auf. Das Automatisierungssystem 1 kann hierbei unter anderem ein PDA-System (PDA = Process Data Acquisition) mit beinhalten. Ein PDA-System speichert erfasste Prozessdaten im Sinne einer Historie ab, so dass auch nachträglich noch auf früher angefallene Prozessdaten zugegriffen werden kann. Dadurch kann insbesondere beispielsweise im Rahmen einer Fehlersuche eine Ermittlung der zugrunde liegenden Ursache erfolgen. Ferner stehen dadurch von allen Prozessgrößen auch die bisherigen zeitlichen Verläufe zur Verfügung. Die Anlage ANL der Grundstoffindustrie kann prinzipiell beliebig ausgebildet sein, vergleiche die obigen Ausführungen. Insbesondere kann die Anlage ANL der Grundstoffindustrie als Anlage der metallerzeugenden Industrie ausgebildet sein, vergleiche ebenfalls die obigen Ausführungen.

Die Sensoreinrichtungen 2 erfassen Messdaten M der Anlage ANL. Die Messdaten M können einzelne Werte sein wie beispielsweise eine singuläre Temperatur oder eine singuläre Geschwindigkeit oder eine singuläre Kraft. Alternativ kann es sich um dimensionale Daten handeln wie beispielsweise einen zeitlichen Temperaturverlauf oder eine örtliche Temperaturverteilung. Auch andere Größen kommen in Frage. Die mittels der Sensoreinrichtungen 2 erfassten Messdaten M werden zumindest teilweise dem Automatisierungssystem 1 zugeführt, das die ihm zugeführten Messdaten M entgegennimmt. Die mittels der Sensoreinrichtungen 2 erfassten Messdaten M werden weiterhin zumindest teilweise an die Mensch-Maschine-Schnittstelle 3 übermittelt. Die Mensch-Maschine Schnittstelle 3 gibt die an sie übermittelten Messdaten M an eine Person 4 aus. Die Person 4 kann beispielsweise eine Bedienperson der Anlage ANL der Grundstoffindustrie, ein Monteur, ein Inbetriebnehmer oder eine andere Person sein oder zum Wartungspersonal gehören.

Es ist möglich, dass alle von den Sensoreinrichtungen 2 erfassten Messdaten M sowohl dem Automatisierungssystem 1 als auch der Mensch-Maschine-Schnittstelle 3 zugeführt werden. In der Regel wird jedoch nur ein Teil der von den Sensoreinrichtungen 2 erfassten Messdaten M sowohl dem Automatisierungssystem 1 als auch der Mensch-Maschine-Schnittstelle 3 zugeführt. In der Regel werden andere der von den Sensoreinrichtungen 3 erfassten Messdaten M ausschließlich dem Automatisierungssystem 1, nicht aber auch der Mensch-Maschine-Schnittstelle 3 zugeführt. Bei wieder anderen von den Sensoreinrichtungen 2 erfassten Messdaten M kann es umgekehrt sein.

Die Mensch-Maschine-Schnittstelle 3 nimmt weiterhin von dem Automatisierungssystem 1 Daten D entgegen und gibt sie an die Person 4 aus. Weiterhin nimmt die Mensch-Maschine-Schnittstelle 3 von der Person 4 Steuerbefehle S entgegen. Die entgegengenommenen Steuerbefehle S leitet die Mensch-Maschine-Schnittstelle 3 an das Automatisierungssystem 1 weiter.

Das Automatisierungssystem 1 ermittelt anhand der ihm zur Verfügung stehenden Informationen weitere Steuerbefehle S'. Die weiteren Steuerbefehle S' gibt das Automatisierungssystem 1 an gesteuerte Elemente 5 (Aktoren 5) der Anlage ANL aus. Dadurch wird die Anlage ANL der Grundstoffindustrie von dem Automatisierungssystem 1 gesteuert und/oder überwacht. Im Rahmen der Ermittlung der weiteren Steuerbefehle S' berücksichtigt das Automatisierungssystem 1 sowohl die entgegengenommenen Messdaten M als auch die von der Mensch-Maschine-Schnittstelle 3 vorgegebenen Steuerbefehle S. Das Automatisierungssystem 1 berücksichtigt im Rahmen der Ermittlung der weiteren Steuerbefehle S' oftmals auch interne Daten I, d.h. Daten, die nur innerhalb des Automatisierungssystems 1 vorliegen. Die internen Daten I werden (im Rahmen des Steuerungsprozesses als solchem) von dem Automatisierungssystem 1 weder von außen entgegengenommen noch nach außen abgegeben. Es kann sich beispielsweise um Daten handeln, die von dem Automatisierungssystem 1 modellgestützt ermittelt werden. Auch kann es sich um Daten handeln, die von dem Automatisierungssystem 1 ohne Modellbildung lediglich mitgerechnet werden, beispielsweise Werte von Timern oder Merkern.

Das Automatisierungssystem 1 umfasst meist mehrere Levels. Level 0 wird von der Sensorik (d.h. den Sensoreinrichtungen 2) und der Aktorik (d.h. den Aktoren 5) gebildet. Level 1 ist die sogenannte Basisautomatisierung, welche die Regelkreise implementiert. Level 2 enthält die technologische Automatisierung, welche die Prozessmodelle umfasst und die Sollwerte für die Regelkreise ermittelt.

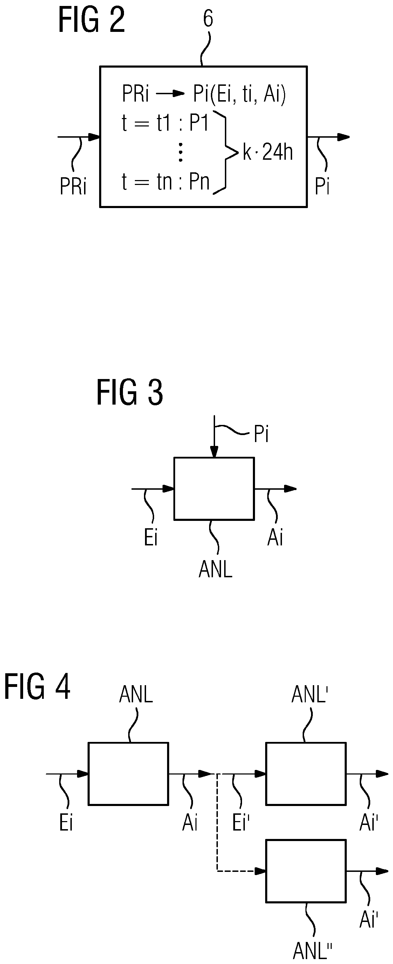

Die Informationen, anhand derer das Automatisierungssystem 1 die Steuerdaten S' ermittelt, umfassen auch Produktionsplanungsdaten Pi, die dem Automatisierungssystem 1 von einem Produktionsplanungssystem 6 übermittelt werden. Der Index i = 1, 2, ... usw. wird hier und auch bei anderen Größen verwendet, um anzudeuten, dass eine Vielzahl entsprechender Größen vorhanden ist. Das Produktionsplanungssystem 6 nimmt entsprechend der Darstellung in FIG 2 eine Vielzahl von Daten entgegen. Die Daten umfassen als wichtigste Daten Primäraufträge PRi. Die Primäraufträge PRi spezifizieren jeweils, welches Ausgangsprodukt Ai bzw. welche Ausgangsprodukte Ai von der Anlage ANL der Grundstoffindustrie erzeugt werden soll bzw. sollen. Sie spezifizieren weiterhin, bis zu welchem Termin der entsprechende Primärauftrag PRi abgearbeitet werden muss oder soll. Dem Produktionsplanungssystem 6 ist weiterhin - beispielsweise aufgrund einer Vorgabe von außen - bekannt, welches Eingangsprodukt Ei bzw. welche Eingangsprodukte Ei zur Erzeugung der Ausgangsprodukte Ai zur Verfügung steht bzw. stehen. Die Eingangsprodukte Ei müssen im Rahmen der Vorgabe an das Produktionsplanungssystem den Primäraufträgen PRi noch nicht zugeordnet sein (auch wenn dies prinzipiell möglich ist). Die Primäraufträge PRi sind eine Ansammlung, d.h. sie bilden keine geordnete Reihenfolge. Das Produktionsplanungssystem 6 ermittelt aus den Primäraufträgen PRi die zugehörigen Produktionsplanungsdaten Pi. Die Produktionsplanungsdaten Pi legen fest, zu welchen Zeitpunkten die Anlage ANL der Grundstoffindustrie das jeweilige Ausgangsprodukt Ai des jeweiligen Primärauftrags PRi erzeugen soll. Das Produktionsplanungssystem 6 bringt die Primäraufträge PRi also in eine entsprechende Reihenfolge. Das Produktionsplanungssystem 6 kann die Produktionsplanungsdaten Pi insbesondere mit dem Ziel optimieren, eine Betriebszeit der Anlage der Grundstoffindustrie zu maximieren.

Die Produktionsplanungsdaten Pi bilden aber nicht nur eine Reihenfolge. Vielmehr legen die Produktionsplanungsdaten Pi auch fest, welche Eingangsprodukte Ei der Anlage ANL der Grundstoffindustrie zugeführt werden sollen. Sie legen weiterhin fest, zu welchen Zeitpunkten ti die Ausgangsprodukte Ai von der Anlage ANL der Grundstoffindustrie erzeugt werden sollen. Wenn die Anlage ANL der Grundstoffindustrie ein Warmwalzwerk zum Walzen von Metallband ist, wird beispielsweise festgelegt, welche Bramme (= Eingangsprodukt) dem Warmwalzwerk zu welchem Zeitpunkt zugeführt werden soll und welche Endwalzdicke das fertiggewalzte Metallband (= Ausgangsprodukt) aufweisen soll. Weiterhin können in den jeweiligen Produktionsplanungsdaten Pi weitere Details festgelegt sein, insbesondere Qualitätsparameter wie beispielsweise Profil und Planheit sowie Dehngrenze, Streckgrenze, Härte und dergleichen mehr.

Das Produktionsplanungssystem 6 führt die Ermittlung der Produktionsplanungsdaten Pi mit einem relativ großen Zeithorizont aus. Der Zeithorizont beträgt entsprechend der Darstellung in FIG 2 zumindest mehrere Tage, oftmals sogar mehrere Wochen oder Monate.

Die Betriebsweise des Produktionsplanungssystems 6 ist als solche bekannt, siehe den bereits erwähnten Prospekt "PSImetals Planning - Production Management Solutions for the Metals Industry" der Firma PSI Metals GmbH.

Die Produktionsplanungsdaten Pi werden vom Produktionsplanungssystem 6 einzeln oder gruppenweise an das Automatisierungssystem 1 übermittelt und somit dem Automatisierungssystem 1 vorgegeben. Die Vorgabe kann direkt oder indirekt über ein Manufacturing Execution System (MES) erfolgen. Die Produktionsplanungsdaten Pi werden vom Automatisierungssystem 1 entsprechend der vorgegebenen Abfolge ausgeführt. Die Anlage ANL der Grundstoffindustrie erzeugt somit entsprechend der Darstellung in FIG 3 in der vorgegebenen Abfolge aus den Eingangsprodukten Ei des jeweiligen Produktionsauftrags Pi die jeweiligen Ausgangsprodukte Ai. Es ist möglich, dass eine 1:1-Beziehung zwischen den Eingangsprodukten Ei und den Ausgangsprodukten Ai besteht. Es ist jedoch auch möglich, dass aus einem einzelnen Eingangsprodukt Ei mehrere Ausgangsprodukte an die erzeugt werden oder umgekehrt mehrere Eingangsprodukte Ei in ein Ausgangsprodukt Ai eingehen. Allgemein besteht eine N:M-Beziehung.

Weiterhin ist ein Zustandsüberwachungssystem 7 vorhanden. Das Zustandsüberwachungssystem 7 nimmt Messdaten M und/oder aus den Messdaten M abgeleitete Daten entgegen. Die Vorgabe der Daten kann über die Sensoreinrichtungen 2 von der Anlage ANL der Grundstoffindustrie direkt erfolgen. Alternativ ist eine Vorgabe über das Automatisierungssystem 1 möglich. Das Zustandsüberwachungssystem 7 ermittelt anhand der entgegengenommenen Daten die bisherigen Zustände Z1 von Komponenten der Anlage ANL der Grundstoffindustrie. Zur Ermittlung der Zustände Z1 der Komponenten der Anlage ANL der Grundstoffindustrie kann das Zustandsüberwachungssystem 7 beispielsweise ein physikalisches Modell, eine Künstliche Intelligenz (insbesondere ein neuronales Netz) oder ein regelbasiertes System verwenden.

Die Zustände Z1 der Komponenten der Anlage ANL der Grundstoffindustrie sind geeignet bestimmt. Beispielsweise kann in dem Fall, dass die Anlage ANL der Grundstoffindustrie als Walzwerk ausgebildet ist, entsprechend der Vorgehensweise der WO 2012/025 438 A1 für Arbeitswalzen der jeweilige Verschleiß als Funktion der sogenannten Walzenreise ermittelt werden. Analoge Vorgehensweisen sind auch bei anderen Anlagen der Grundstoffindustrie für deren Komponenten möglich.

Der Begriff "bisherige Zustände" ist in dem Sinne gemeint, dass für den momentanen Zeitpunkt der sich ergebende Zustand Z1 ermittelt wird. Aufgrund des Umstands, dass dieser Zustand Z1 nicht nur von den momentanen Gegebenheiten, sondern auch von der Vergangenheit der Komponenten abhängt, müssen jedoch zuvor auch die vorherigen Zustände Z1 ermittelt worden sein. Es ist jedoch nicht erforderlich, dass alle bisherigen Zustände Z1 im Sinne einer Historie auch weiterhin zur Verfügung stehen (auch wenn dies möglich ist) . Die bisherigen Zustände Z1 müssen jedoch zuvor ermittelt worden sein.

Weiterhin ermittelt das Zustandsüberwachungssystem 7 auch zukünftig erwartete Zustände Z1 der Komponenten der Anlage ANL der Grundstoffindustrie. Im Rahmen dieser Ermittlung verwertet das Zustandsüberwachungssystem 7 zusätzlich Produktionsplanungsdaten Pi für die als nächstes zu erzeugenden Ausgangsprodukte Ai oder aus den entsprechenden Produktionsplanungsdaten Pi abgeleitete Daten. Insbesondere kann das Zustandsüberwachungssystem 7 basierend auf diesen Produktionsdaten Pi modellgestützt eine erwartete Betriebsweise der Anlage ANL der Grundstoffindustrie ermitteln und anhand der ermittelten erwarteten Betriebsweise die zukünftig erwarteten Zustände Z1 ermitteln. Diese Vorhersage beruht hierbei nicht auf einer statistischen Auswertung, sondern konkret auf den Produktionsplanungsdaten Pi für die als nächstes zu erzeugenden Ausgangsprodukte Ai. Auch diese Vorgehensweise ist in der WO 2012/025 438 A1 für ein Walzwerk bzw. für die Arbeitswalzen des Walzwerks und deren zukünftigen Verschleiß als Funktion der zukünftigen Walzenreise erläutert. Analoge Vorgehensweisen sind auch bei anderen Anlagen der Grundstoffindustrie für deren Komponenten möglich. Falls die dem Zustandsüberwachungssystem 7 zugeführten Daten dimensionale Daten sind oder umfassen, kann das Zustandsüberwachungssystem 7 zur Verarbeitung der ihm zugeführten dimensionalen Daten und insbesondere zur Ermittlung der zukünftig erwarteten Zustände Z1 beispielsweise eine Recheneinrichtung umfassen, welche die dimensionalen Daten mittels einer Künstlichen Intelligenz verarbeitet. Eine derartige Recheneinrichtung ist in der älteren, nicht vorveröffentlichten Anmeldung mit dem internen Aktenzeichen 201600233 der Anmelderin und dem Titel "Verwendung umfassender Künstlicher Intelligenz bei Anlagen der Grundstoffindustrie" erläutert.

Weiterhin ist ein Qualitätsermittlungssystem 8 vorhanden. Das Qualitätsermittlungssystem 8 ist ein von dem Automatisierungssystem 1 verschiedenes System. Es nimmt - analog zum Zustandsüberwachungssystem 7 - Messdaten M und/oder aus den Messdaten M abgeleitete Daten entgegen. Die Vorgabe der Daten kann über die Sensoreinrichtungen 2 von der Anlage ANL direkt erfolgen. Alternativ ist eine Vorgabe über das Automatisierungssystem 1 möglich. Das Qualitätsermittlungssystem 8 nimmt weiterhin vom Zustandsüberwachungssystem 7 die bisherigen und die zukünftig erwarteten Zustände Z1 der Komponenten der Anlage ANL der Grundstoffindustrie entgegen. Schließlich nimmt das Qualitätsermittlungssystem 8 die Produktionsplanungsdaten Pi entgegen. Die Vorgabe kann alternativ vom Produktionsplanungssystem 6 oder vom Automatisierungssystem 1 erfolgen.

Das Qualitätsermittlungssystem 8 ermittelt aus den entgegengenommenen Daten die Zustände Z2 der von der Anlage ANL der Grundstoffindustrie erzeugten Ausgangsprodukte Ai und der zu erzeugenden Ausgangsprodukte Ai. Weiterhin ermittelt das Qualitätsermittlungssystem 8 aus den entgegengenommenen Daten vergangene und zukünftige Zustände Z3 der Anlage ANL der Grundstoffindustrie als Ganzes. Wenn die Anlage ANL der Grundstoffindustrie ein Walzwerk ist, kann das Qualitätsermittlungssystem 8 anhand der ihm zur Verfügung stehenden Daten als Zustand Z2 für ein bestimmtes Ausgangsprodukt Ai beispielsweise Breite und Dicke sowie tatsächliche Qualitätsparameter wie beispielsweise Profil und Planheit sowie Dehngrenze, Streckgrenze, Härte und dergleichen mehr ermitteln. Weiterhin kann das Qualitätsermittlungssystem 8 im gleichen Fall anhand der ihm zur Verfügung stehenden Daten als Zustand Z3 der Anlage ANL der Grundstoffindustrie - also als Prozesszustand - eine entsprechende Bewertung (z.B. gut oder schlecht, stabil oder instabil, effizient oder ineffizient oder entsprechende Zwischenstufen) ermitteln. Ebenso können im Falle einer stahlerzeugenden Anlage (beispielsweise einem Konverter) als Zustand Z2 die chemische Zusammensetzung und die Temperatur des jeweiligen Ausgangsprodukts Ai (in diesem Fall einer Schmelze) ermittelt oder vorhergesagt werden. Der Zustand Z3 der Anlage ANL kann in diesem Fall in analoger Weise ermittelt werden. Alternativ zu einer Ermittlung des Zustands Z3 der Anlage ANL der Grundstoffindustrie durch das Qualitätsermittlungssystem 8 ist es auch möglich, dass der Zustand Z3 der Anlage ANL der Grundstoffindustrie dem Qualitätsermittlungssystem 8 vom Zustandsüberwachungssystem 7 zur Verfügung gestellt wird. Im Ergebnis stellt der Zustand Z3 der Anlage ANL der Grundstoffindustrie den Zusammenhang zwischen dem Zustand der Anlage ANL der Grundstoffindustrie und der resultierenden Produktqualität her.

Ein Beispiel, hier für eine Fertigstraße: Wenn in einem Zunderwäscher der Fertigstraße eine Störung auftritt, beispielsweise eine Düse verstopft ist oder der Zunderwäscher mit variierendem Druck betrieben wird, kann diese Störung zu einer zu geringen Entzunderung des Warmbandes und daraus resultierend zu Oberflächenfehlern im Warmband führen. Der Betriebszustand des Zunderwäschers wird dem Qualitätsermittlungssystem 8 vom Zustandsüberwachungssystem 7 zur Verfügung gestellt. Das Qualitätsermittlungssystem 8 ermittelt als Zustand Z2 für das Ausgangsprodukt Ai die entsprechende Beeinträchtigung der Qualität. Als Zustand Z3 kann das Qualitätsermittlungssystem 8 beispielsweise eine Instabilität (aufgrund des variierenden Druckes) ermitteln.

Ein weiteres Beispiel, hier für eine Stranggießmaschine: Wenn Kühleinrichtungen der Stranggießmaschine defekt sind, beispielsweise Düsen verstopft sind oder Zuführeinrichtungen zum Zuführen von Wasser zu den Düsen defekt sind, führt dies zu einer ungleichmäßigen Erstarrung des gegossenen Metallstranges und damit zu ungleichmäßigen Materialeigenschaften. Das Zustandsüberwachungssystem 7 stellt den entsprechenden Defekt fest. Das Qualitätsermittlungssystem ermittelt als Zustand Z2 beispielsweise die Qualität des gegossenen Metallstranges und als Zustand Z3 beispielsweise die Qualität des Betriebs und/ oder das Ausmaß für die Gefahr eines Kokillendurchbruchs.

Weiterhin können die Zustände Z2 der herzustellenden Ausgangsprodukte Ai nach Bedarf bestimmt sein. Hierzu - ohne Anspruch auf Vollständigkeit - einige Beispiele:
- Im Rahmen der Herstellung von Stahl können als Zustände Z2 die Temperatur, die chemische Analyse und das Gewicht der Stahlschmelze und Pufferzeiten ermittelt werden. Die Analyse kann insbesondere die Bestandteile an Schwefel, Phosphor und Kohlenstoff, Sauerstoff und Stickstoff im Stahl enthalten.
- Im Rahmen des Stranggießens können als Zustände Z2 beispielsweise die Gießgeschwindigkeit, die Temperatur und Parameter des Abkühl- und Erstarrungsprozesses ermittelt werden.
- Im Rahmen des Walzens können beispielsweise die Umformrate, das Temperaturprofil, die Entzunderungsart, die Endwalztemperatur, die Haspeltemperatur, das Geschwindigkeitsprofil des Metallbandes usw. ermittelt werden.

Der Aufbau und die Wirkungsweise des Qualitätsermittlungssystems 8 sind, soweit es die Ermittlung der Zustände Z2 der bereits erzeugten Ausgangsprodukte Ai und der vergangenen Zustände Z3 der Anlage ANL der Grundstoffindustrie betrifft, bekannt. Rein beispielhaft kann auf den bereits erwähnten Fachaufsatz "TPQC - Through Process Quality Control" von Gerhard Kurka und Gerald Hohenbichler verwiesen werden. Soweit es die Ermittlung der Zustände Z2 für noch zu erzeugende Ausgangsprodukte Ai und der zukünftigen Zustände Z3 der Anlage ANL der Grundstoffindustrie betrifft, kann auf diese Vorgehensweise zurückgegriffen werden. Insbesondere kann - analog zur Vorhersage für die Zustände Z1 der Komponenten der Anlage ANL der Grundstoffindustrie im Rahmen des Zustandsüberwachungssystems 7 - basierend auf den Produktionsdaten Pi für noch zu erzeugende Ausgangsprodukte Ai modellgestützt eine erwartete Betriebsweise der Anlage ANL der Grundstoffindustrie ermittelt werden und können anhand der so ermittelten Betriebsweise die Zustände Z2 der von der Anlage ANL der Grundstoffindustrie zu erzeugenden Ausgangsprodukte Ai und die zukünftig erwarteten Zustände Z3 der Anlage ANL der Grundstoffindustrie ermittelt werden. Auch das Qualitätsermittlungssystem 8 kann - analog zum Zustandsüberwachungssystem 7 - zur Verarbeitung der ihm zugeführten Daten und auch hier insbesondere zur Ermittlung zukünftiger Zustände Z3 eine Recheneinrichtung umfassen, wie sie in der Anmeldung mit dem internen Aktenzeichen 201600233 der Anmelderin erläutert ist.

Weiterhin ist ein Wartungsplanungssystem 9 vorhanden. Das Wartungsplanungssystem nimmt vom Zustandsüberwachungssystem 7 die bisherigen und die zukünftig erwarteten Zustände Z1 der Komponenten der Anlage ANL der Grundstoffindustrie entgegen. Beispielsweise können im Falle eines Walzwerks als Anlage ANL der Grundstoffindustrie dem Wartungsplanungssystem 9 vom Zustandsüberwachungssystem 7 der bisherige und der zukünftig erwartete Verschleiß der Arbeitswalzen der Walzgerüste des Walzwerks vorgegeben werden. Weiterhin nimmt das Wartungsplanungssystem 9 vom Qualitätsermittlungssystem 8 die Zustände Z2 der von der Anlage ANL der Grundstoffindustrie erzeugten Ausgangsprodukte Ai und der zu erzeugenden Ausgangsprodukte Ai und/oder vergangene und zukünftige Zustände Z3 der Anlage ANL der Grundstoffindustrie als Ganzes entgegen. Unabhängig von der Art und Weise der Vorgabe stehen dem Wartungsplanungssystem 9 die erforderlichen Daten jedoch so früh wie möglich zu Weiterverarbeitung zur Verfügung.

Das Wartungsplanungssystem 9 ermittelt unter Berücksichtigung dieser Daten Wartungsplanungsdaten W für die Anlage ANL der Grundstoffindustrie. Die Wartungsplanungsdaten W umfassen zunächst eine (vorzugsweise chronologische) Auflistung der zu ergreifenden Wartungsmaßnahmen. Weiterhin umfassen die Wartungsplanungsdaten W eine Auflistung der zur Durchführung der Wartung erforderlichen Gegenstände. Die Liste mit Maßnahmen wird an die Person 4 ausgegeben. Die Auflistung der erforderlichen Gegenstände kann an ein Unternehmensplanungssystem 10 übermittelt werden, von dem diese Auflistung automatisiert verarbeitet werden kann.

Die Betriebsweise des Wartungsplanungssystems 9 als solche, also die Ermittlung der Wartungsplanungsdaten W, ist bekannt, beispielsweise in Form des MAXIMO-Systems der IBM Corporation oder des PREDIX-Systems der General Electric Company. Im Stand der Technik erfolgt die Ermittlung der Wartungsplanungsdaten W jedoch anhand von Daten, die einmalig vorab durch Schätzung ermittelt wurden und danach statisch beibehalten wurden. Im Rahmen der vorliegenden Erfindung werden hingegen zur Ermittlung der Wartungsplanungsdaten W die aktuellen Daten des Zustandsüberwachungssystems 7 und des Qualitätsermittlungssystems 8 herangezogen.

Alternativ oder zusätzlich ist es möglich, dass das Produktionsplanungssystem 6 vom Zustandsüberwachungssystem 7 die bisherigen und die zukünftig erwarteten Zustände Z1 der Komponenten der Anlage ANL der Grundstoffindustrie entgegennimmt und weiterhin vom Qualitätsermittlungssystem 8 die Zustände Z2 der von der Anlage ANL der Grundstoffindustrie erzeugten Ausgangsprodukte Ai und der zu erzeugenden Ausgangsprodukte Ai und/oder vergangene und zukünftige Zustände Z3 der Anlage ANL der Grundstoffindustrie als Ganzes entgegennimmt und bei der Ermittlung der Produktionsplanungsdaten Pi berücksichtigt. Dadurch kann beispielsweise die Produktionsplanung vom Produktionsplanungssystem 6 jederzeit aktualisiert werden, wenn aufgrund der zukünftig erwarteten Zustände Z1 der Komponenten der Anlage ANL der Grundstoffindustrie bestimmte Betriebszustände der Anlage ANL der Grundstoffindustrie nicht mehr möglich sind, um ein bestimmtes gewünschtes Ausgangsprodukt Ai herzustellen. In analoger Weise kann das Produktionsplanungssystem 6 reagieren, wenn aufgrund der zukünftig erwarteten Zustände Z2 der zu erzeugenden Ausgangsprodukte Ai vorhergesagt werden kann, dass die entsprechenden Ausgangsprodukte Ai geforderte Qualitätsparameter nicht mehr einhalten können.

In FIG 1 ist nicht nur die obenstehend erläuterte Basiskonfiguration des zugehörigen Produktions- und Wartungsplanungssystems dargestellt, sondern zugleich eine Mehrzahl von vorteilhaften Ausgestaltungen dargestellt. Die Ausgestaltungen sind hierbei unabhängig voneinander realisierbar. Sie können jedoch nach Bedarf auch miteinander kombiniert werden.

Eine erste Ausgestaltung besteht darin, dass das Wartungsplanungssystem 9 vom Produktionsplanungssystem 6 die Produktionsplanungsdaten Pi entgegennimmt. In diesem Fall ist es möglich, dass das Wartungsplanungssystem 9 die Produktionsplanungsdaten Pi bei der Ermittlung der Wartungsplanungsdaten W berücksichtigt. Beispielsweise kann das Wartungsplanungssystem 9 Wartungsmaßnahmen gezielt in Zeiträume legen, zu denen aufgrund der Produktionsplanung eine Produktionspause eingelegt werden muss. Insbesondere kann das Wartungsplanungssystem 9 eine Wartungsmaßnahme vorziehen, wenn absehbar ist, dass ohne das Vorziehen der Wartungsmaßnahme zu einem späteren Zeitpunkt die Wartungsmaßnahme zu einem unerwünschten Produktionsstopp führen würde und mit Vorziehen der Wartungsmaßnahme die Wartungsmaßnahme während eines aufgrund der Produktionsplanung sowieso vorgesehenen Produktionsstopps durchgeführt werden kann.

Eine zweite Ausgestaltung besteht darin in der Umkehrung dieses Vorgangs. Sie besteht also darin, dass das Produktionsplanungssystem 6 vom Wartungsplanungssystem 9 die Wartungsplanungsdaten W entgegennimmt. In diesem Fall ist es möglich, dass das Produktionsplanungssystem 6 die Wartungsplanungsdaten W bei der Ermittlung der Produktionsplanungsdaten Pi berücksichtigt. Beispielsweise kann das Produktionsplanungssystem 6 je nachdem, für welchen Zeitpunkt die nächste Wartung geplant ist, einen einzelnen Produktionsauftrag Pi vorziehen oder verzögern. Wenn die Produktionsaufträge Pi unterschiedliche Zeiten für ihre Ausführung benötigen, kann das Produktionsplanungssystem 6 die Produktionsaufträge Pi möglicherweise auch so gruppieren, dass eine wartungsbedingte Pause nach einer möglichst geringen Zeit nach der Beendigung der Ausführung eines Produktionsauftrags Pi beginnen kann. Auch kann das Produktionsplanungssystem 6 den nächsten Produktionsauftrag Pi unmittelbar nach Beendigung der wartungsbedingten Pause - also so bald wie möglich - starten.

Eine dritte Ausgestaltung besteht darin, dass das Qualitätsermittlungssystem 8 unter Berücksichtigung der Produktionsplanungsdaten Pi und/oder der zukünftig erwarteten Zustände Z1 der Komponenten der Anlage ANL der Grundstoffindustrie Grenzwerte L1 für dynamische Einstellungen und/oder Grenzwerte L2 für sich ergebende Zustände Z1 der Komponenten der Anlage ANL der Grundstoffindustrie ermittelt. Einstellungen der Komponenten sind in diesem Zusammenhang Zustände, die durch Ansteuerung entsprechender Aktoren 5 aktiv eingestellt werden können, beispielsweise eine Walzkraft, eine Drehzahl, ein Moment, eine Temperatur und dergleichen mehr. Zustände Z1 sind hingegen Ergebnisse, die sich beim Betrieb der entsprechenden Komponenten ungewollt einstellen, beispielsweise ein Verschleiß.

Das Qualitätsermittlungssystem 8 gibt im Falle der dritten Ausgestaltung die Grenzwerte L1 für die dynamischen Einstellungen dem Automatisierungssystem 1 und/oder die Grenzwerte L2 für die sich ergebenden Zustände Z1 dem Zustandsüberwachungssystem 7 als einzuhaltende Grenzwerte vor. Die Grenzwerte L1, L2 können insbesondere dadurch bestimmt sein, dass sie eingehalten werden müssen, damit für die zu erzeugenden Ausgangsprodukte Ai vorbestimmte Qualitätsstandards eingehalten werden. Beispielsweise kann als Grenzwert L1 für eine dynamische Einstellung im Falle eines Walzwerks eine maximale Rückbiegung der Arbeitswalzen eines Walzgerüsts oder eine maximale Konturschwankung über die Breite der Arbeitswalzen vorgegeben werden, damit Profil- und Planheitswerte eingehalten werden. Ebenso kann im gleichen Fall dem Zustandsüberwachungssystem 7 als einzuhaltender Grenzwert L2 ein maximaler Verschleiß der Arbeitswalzen eines Walzgerüsts vorgegeben werden, damit die Profil- und Planheitswerte eingehalten werden. Auch kann beispielsweise als Grenzwert L1 oder L2 ein bestimmter Temperaturbereich für das zu walzende Walzgut vorgegeben werden, damit das Walzwerk geforderte Umformungsgrade erreichen kann. Auch kann als Grenzwert L1 oder L2 ein bestimmter minimaler oder maximaler Temperaturgradient in einer dem Walzwerk nachgeordneten Kühlstrecke vorgegeben werden, damit geforderte mechanische Eigenschaften des Walzguts eingehalten werden.

Eine vierte Ausgestaltung besteht darin, dass das Wartungsplanungssystem 9 die Wartungsplanungsdaten W an das Qualitätsermittlungssystem 8 übermittelt. In diesem Fall kann das Qualitätsermittlungssystem 8 bei der Ermittlung der Grenzwerte L1 für die dynamischen Einstellungen und/oder die Grenzwerte L2 für die sich ergebenden Zustände Z1 auch die Wartungsplanungsdaten W berücksichtigen. Beispielsweise kann im Falle eines Walzwerks bei frisch gewechselten Arbeitswalzen (Verschleiß nahezu 0) eine höhere Rückbiegung zugelassen werden als bei bereits teilweise verschlissenen Arbeitswalzen.

In vielen Fällen ist entsprechend der Darstellung in FIG 4 das von der Anlage ANL der Grundstoffindustrie erzeugte Ausgangsprodukt Ai seinerseits wiederum ein Eingangsprodukt Ei' für eine weitere Anlage ANL' der Grundstoffindustrie, die damit ein weiterverarbeitetes Produkt Ai' erzeugt. In diesem Fall kann eine fünfte Ausgestaltung darin bestehen, dass das Qualitätsermittlungssystem 8 anhand des Zustands eines der von der Anlage ANL der Grundstoffindustrie erzeugten Ausgangsprodukte Ai für die weitere Anlage ANL' der Grundstoffindustrie Schranken für die Behandlung dieses Ausgangsprodukts Ai in der weiteren Anlage ANL' der Grundstoffindustrie ermittelt und die Schranken einem Automatisierungssystem 1' oder einem Produktionsplanungssystem 6' für die weitere Anlage ANL' der Grundstoffindustrie vorgibt. Beispielsweise kann anhand der Endtemperatur einer erzeugten Stahlschmelze in einem Sauerstoffblasofen nach der Entcarbonisierung entschieden werden, auf welche Art und Weise die Stahlschmelze in einem nachfolgenden Pfannenprozess weiterverarbeitet werden soll.

Sinn und Zweck des Qualitätsermittlungssystems 8 ist unter anderem, dass das Qualitätsermittlungssystem 8 anhand des Zustands Z2 eines der von der Anlage ANL der Grundstoffindustrie erzeugten Ausgangsprodukte Ai prüft, ob dieses Ausgangsprodukt Ai Qualitätsparameter einhält, die für dieses Ausgangsprodukt Ai vordefiniert sind. Beispielsweise kann das Qualitätsermittlungssystem 8 im Falle einer Stahlschmelze deren chemische Zusammensetzung und deren Temperatur überprüfen. Aufbauend auf dieser Prüfung gibt das Qualitätsermittlungssystem 8 bei Einhalten der vordefinierten Qualitätsparameter durch dieses Ausgangsprodukt Ai eine bereits geplante Weiterverarbeitung dieses Ausgangsprodukts Ai durch die weitere Anlage ANL' der Grundstoffindustrie frei. Im Rahmen der vorliegenden Erfindung kann eine auf der fünften Ausgestaltung aufbauende sechste Ausgestaltung darin bestehen, dass das Qualitätsermittlungssystem 8 bei Nichteinhalten der vordefinierten Qualitätsparameter durch dieses Ausgangsprodukt Ai zusätzlich zu den Schranken für die Behandlung dieses Ausgangsprodukts Ai in der weiteren Anlage ANL' der Grundstoffindustrie unter Berücksichtigung der tatsächlichen Qualitätsparameter dieses Ausgangsprodukts Ai eine modifizierte Weiterverarbeitung durch die weitere Anlage ANL' der Grundstoffindustrie ermittelt. Beispielsweise kann eine modifizierte Weiterverarbeitung ermittelt werden, für welche die Qualitätsanforderungen des weiteren Ausgangsprodukts Ai' reduziert werden. Im Einzelfall ist - bei besonders exzellenter Erfüllung der Qualitätsanforderungen - sogar die umgekehrte Vorgehensweise möglich, dass die Qualitätsanforderungen heraufgesetzt werden, dass also wider Erwarten sogar ein höherwertiges weiteres Ausgangsprodukt Ai' als ursprünglich geplant erzeugt werden kann. Weiterhin ist es möglich, dass die Verarbeitung als solche modifiziert wird, beispielsweise im Falle des Walzens ein Produkt mit einer reduzierten Profilgenauigkeit erzeugt wird. Eine andere Modifikation kann im Falle der Stahlerzeugung darin bestehen, eine andere Stahlsorte herzustellen. Es kann auch bedeuten, eine weitere Behandlung oder eine zusätzliche Behandlung durchzuführen, so dass das Ausgangsprodukt Ai doch noch die Qualitätsanforderungen erfüllen kann. Beispielsweise kann, wenn das Ausgangsprodukt Ai eine Stahlschmelze ist, in einem Pfannenprozess eine modifizierte metallurgische Behandlung erfolgen, so dass die Stahlschmelze am Ende des Pfannenprozesses doch die geforderte Qualität aufweist. Auch kann beispielsweise entschieden werden, in einem Sauerstoffblasofen nach der Entcarbonisierung noch einen Nachblasvorgang durchzuführen, um eine gewünschte Qualität doch noch zu erreichen. Es kann entsprechend der Darstellung in FIG 4 auch bedeuten, dass das Ausgangsprodukt Ai in einer anderen Anlage ANL" der Grundstoffindustrie - also einer von der weiteren Anlage ANL' der Grundstoffindustrie verschiedenen Anlage der Grundstoffindustrie - als ursprünglich geplant verarbeitet wird.

In einer Ergänzung dieser Ausgestaltung übermittelt das Qualitätsermittlungssystem 8 die modifizierte Weiterverarbeitung an das Produktionsplanungssystem 6. Dadurch kann das Produktionsplanungssystem 6 die modifizierte Weiterverarbeitung im Rahmen der Ermittlung der Produktionsplanungsdaten Pi berücksichtigen. Insbesondere kann das Produktionsplanungssystem 6 berücksichtigen, dass das eigentlich gewünschte Ausgangsprodukt Ai nicht produziert werden konnte und daher erneut produziert werden muss. Die entsprechenden Änderungen können vom Produktionsplanungssystem 6 vorgenommen werden.

Dem Qualitätsermittlungssystem 8 werden, wie bereits erwähnt, nicht nur vom Automatisierungssystem 1 und/oder von den Sensoreinrichtungen 2 Daten zugeführt, sondern auch vom Zustandsüberwachungssystem 7. Dadurch ist es möglich, dass das Qualitätsermittlungssystem 8 entsprechend einer siebten Ausgestaltung im Falle einer Abweichung des Zustands Z2 eines der von der Anlage ANL der Grundstoffindustrie erzeugten Ausgangsprodukte Ai von einem erwarteten Zustand Z2 eine Analyse der Zustände Z1 der Komponenten der Anlage ANL der Grundstoffindustrie und/oder von Betriebsparametern der Anlage ANL der Grundstoffindustrie durchzuführt. Die Analyse dient einer Auffindung der Ursache für die Abweichung des Zustands Z2 vom erwarteten Zustand Z2. Zur Implementierung einer derartigen Fähigkeit kann das Qualitätsermittlungssystem 8 beispielsweise ein neuronales Netz aufweisen, insbesondere ein tiefes neuronales Netz (DNN = deep neural network) oder ein faltendes neuronales Netz (CNN = convolutional neural network). Die entsprechenden Netztypen sind Fachleuten allgemein bekannt.

In einer achten Ausgestaltung ist es möglich, dass das Zustandsüberwachungssystem 7 bei Erreichen von Grenzwerten L1 durch die bisherigen oder zukünftig erwarteten Zustände Z1 der Komponenten der Anlage ANL der Grundstoffindustrie entsprechende Meldungen an das Wartungsplanungssystem 9 übermittelt. Dies steht im Gegensatz zur Vorgehensweise des Standes der Technik, bei dem lediglich eine Übermittlung an die Person 4 erfolgt und die Person 4 selbst entsprechende Eingaben im Wartungsplanungssystem 9 vornehmen muss. Weiterhin ist es möglich, dass die Grenzwerte L1 unter Berücksichtigung der Produktionsplanungsdaten Pi ermittelt werden. Die Ermittlung kann insbesondere vom Qualitätsermittlungssystem 8 vorgenommen werden. Unter Umständen ist auch eine eigenständige Ermittlung durch das Zustandsüberwachungssystem 7 möglich.

Die Anlage ANL der Grundstoffindustrie wird im Rahmen der Herstellung eines jeweiligen Ausgangsprodukts Ai in der Regel während einer jeweiligen Zeitspanne von maximal wenigen Stunden betrieben. Die Produktionsplanung und die Wartungsplanung hingegen weisen deutlich größere Zeithorizonte auf. Andererseits benötigen das Produktionsplanungssystem 6 und das Wartungsplanungssystem 9 für eine jeweilige Ermittlung der Produktionsplanungsdaten Pi beziehungsweise der Wartungsdaten W nur eine Rechenzeit, die sich im Bereich von wenigen Stunden bewegt, beispielsweise maximal zwei Stunden. Weiterhin stehen die weitaus meisten Daten, welche die verschiedenen Systeme 6 bis 9 benötigen, jederzeit aktuell zur Verfügung. Auch die darauf aufbauenden Verarbeitungen, Verknüpfungen und Optimierungen können daher jederzeit aktuell durchgeführt werden. Es ist somit möglich, das Verfahren zur Planung von Produktion und/oder Wartung von Anlagen ANL der Grundstoffindustrie automatisiert iterativ auszuführen. Dadurch können - bezogen auf die Zykluszeiten der Anlage ANL der Grundstoffindustrie - die Produktionsplanungsdaten Pi und/oder die Wartungsdaten quasi in Echtzeit zur Verfügung gestellt werden. Hierbei ist es alternativ möglich, dass das Verfahren zur Planung von Produktion und/oder Wartung kontinuierlich oder auf Anforderung durch die Person 4 ausgeführt wird.

Der Kern der vorliegenden Erfindung besteht somit darin, dass die verschiedenen IT-Systeme 1 und 6 bis 9, die im Zusammenhang mit der Anlage ANL der Grundstoffindustrie verwendet werden und bisher nur in geringem Umfang miteinander vernetzt sind bzw. nur Insellösungen darstellen, miteinander verknüpft, vernetzt und gekoppelt werden. Die erforderlichen Schnittstellen zur Vernetzung der Systeme 1 und 6 bis 9 untereinander können ohne weiteres erstellt werden. Durch die Vernetzung wird eine ganzheitliche Betrachtung des Betriebs der Anlage ANL der Grundstoffindustrie möglich.

Es ist möglich, dass die verschiedenen Systeme 6 bis 9 in unmittelbarer Nähe oder zumindest in Nähe der Anlage ANL der Grundstoffindustrie angeordnet sind. Sie können jedoch (vollständig oder teilweise) ebenso an einem anderen Ort angeordnet sein. Lediglich das Automatisierungssystem 1 sollte vor Ort sein. Auch eine verteilte oder nicht lokalisierte Anordnung - beispielsweise in einer Cloud - ist möglich. Ausgaben können nach Bedarf auch als Smart Devices bzw. Apps realisiert sein.

Das erfindungsgemäße Verfahren kann alternativ halbautomatisch oder vollautomatisch ablaufen. Beim halbautomatischen Ablauf führen die verschiedenen Systeme 6 bis 9 ihre Ermittlungen durch und geben die Ergebnisse ihrer Ermittlungen an die Person 4 aus. Die Person 4 ist sodann in der Lage, die Ergebnisse zu bestätigen und dadurch freizugeben oder aber - im Einzelfall - die Freigabe zu verweigern. Beim vollautomatischen Ablauf können die verschiedenen Systeme 6 bis 9 die Ergebnisse ihrer Ermittlungen zwar ebenfalls an die Person 4 ausgeben. Dies ist jedoch nicht mehr zwingend, da keine Freigabe mehr abgefragt wird, sondern die Ergebnisse sofort aktiv geschaltet werden. Die Person 4 hat aber auch im vollautomatischen Betrieb immer noch die Möglichkeit, mittels eines sogenannten Overrides einzugreifen.

Die verschiedenen Systeme 6 bis 9 können eigenständige Recheneinrichtungen sein. Sie können ebenso auch in einem gemeinsamen Rechensystem zusammengefasst sein. Sie können unter Umständen sogar innerhalb des Automatisierungssystems 1 ablaufen. Entscheidend sind die oben stehend erläuterten Funktionalitäten, nicht aber die Implementierung in bestimmten Recheneinrichtungen.

Die vorliegende Erfindung weist viele Vorteile auf. Insbesondere erfolgt eine ganzheitliche Betrachtung. Weiterhin werden gegenseitige Abhängigkeiten berücksichtigt. Dadurch ergeben sich eine verbesserte Vorhersagegenauigkeit und eine verbesserte Ermittlung der Restbetriebsdauer von Komponenten der Anlage ANL der Grundstoffindustrie. Auch ist die Ermittlung der verschiedenen Daten durch die verschiedenen Systeme 6 bis 9 jederzeit aktuell. Die zugehörigen Systeme 6 bis 9 können nicht nur bei Neuanlagen implementiert werden, sondern auch im Rahmen von Modernisierungen nachgerüstet werden. Der Automatisierungsgrad bei der Produktionsplanung und der Wartungsplanung kann deutlich erhöht werden. Dennoch kann die Person 4 bei Bedarf immer noch korrigierend eingreifen. Es ergibt sich eine verbesserte Planungsgenauigkeit und eine erhöhte Robustheit bei Störungen. Der Betrieb der Anlage ANL gilt der Grundstoffindustrie bleibt auch dann sicher, wenn die Person 4 noch relativ wenig Erfahrung aufweist. Viele Bedienungen werden vermieden. In den verschiedenen Systemen 6 bis 9 können Künstliche Intelligenzen implementiert werden. Dadurch wird ein weiteres Potenzial zur Verbesserung eröffnet.

### Bezugszeichenliste

- 1: Automatisierungssystem
- 2: Sensoreinrichtungen
- 3: Mensch-Maschine-Schnittstelle
- 4: Person
- 5: gesteuerte Elemente (Aktoren)
- 6: Produktionsplanungssystem
- 7: Zustandsüberwachungssystem
- 8: Qualitätsermittlungssystem
- 9: Wartungsplanungssystem
- 10: Unternehmensplanungssystem

- Ai, Ai': Ausgangsprodukte
- ANL, ANL', ANL": Anlagen der Grundstoffindustrie
- D: Daten
- Ei, Ei': Eingangsprodukte
- I: interne Daten
- L1, L2: Grenzwerte
- M: Messdaten
- Pi: Produktionsplanungsdaten
- PRi: Primäraufträge
- S, S': Steuerbefehle
- W: Wartungsplanungsdaten
- Z1, Z2, Z3: Zustände

## Patentansprüche

1. Verfahren zur Planung von Produktion und/oder Wartung von Anlagen (ANL) der Grundstoffindustrie,
- wobei die Anlage (ANL) der Grundstoffindustrie von einem Automatisierungssystem (1) gesteuert wird und unter Steuerung durch das Automatisierungssystem (1) eine Abfolge von Produktionsaufträgen abarbeitet, wobei die Anlage (ANL) der Grundstoffindustrie pro Produktionsauftrag aus einer Anzahl von Eingangsprodukten (Ei) eine Anzahl von Ausgangsprodukten (Ai) erzeugt,
- wobei ein Produktionsplanungssystem (6) mit einem Zeithorizont von zumindest mehreren Tagen Produktionsplanungsdaten (Pi) ermittelt, die festlegen, zu welchen Zeitpunkten der Anlage (ANL) der Grundstoffindustrie welche Eingangsprodukte (Ei) zugeführt werden sollen, welche Ausgangsprodukte (Ai) von der Anlage (ANL) der Grundstoffindustrie aus den Eingangsprodukten (Ei) erzeugt werden sollen und zu welchen Zeitpunkten die Ausgangsprodukte (Ai) von der Anlage (ANL) der Grundstoffindustrie erzeugt werden sollen,
- wobei das Produktionsplanungssystem (6) die Produktionsplanungsdaten (Pi) dem Automatisierungssystem (1) vorgibt,
- wobei ein Zustandsüberwachungssystem (7) von dem Automatisierungssystem (1) und/oder über Sensoreinrichtungen (2) direkt von der Anlage (ANL) der Grundstoffindustrie Messdaten (M) und/oder aus den Messdaten (M) abgeleitete Daten entgegennimmt, daraus die bisherigen Zustände (Z1) von Komponenten der Anlage (ANL) der Grundstoffindustrie ermittelt und weiterhin unter zusätzlicher Verwertung der Produktionsplanungsdaten (Pi) oder aus den Produktionsplanungsdaten (Pi) abgeleiteter Daten zukünftig erwartete Zustände (Z1) der Komponenten der Anlage (ANL) der Grundstoffindustrie ermittelt,
- wobei ein von dem Automatisierungssystem (1) verschiedenes Qualitätsermittlungssystem (8) von dem Automatisierungssystem (1) und/oder über Sensoreinrichtungen (2) direkt von der Anlage (ANL) der Grundstoffindustrie Messdaten (M) und/oder aus den Messdaten (M) abgeleitete Daten entgegennimmt, vom Zustandsüberwachungssystem (7) die bisherigen und die zukünftig erwarteten Zustände (Z1) der Komponenten der Anlage (ANL) der Grundstoffindustrie entgegennimmt und vom Produktionsplanungssystem (6) oder vom Automatisierungssystem (1) die Produktionsplanungsdaten (Pi) entgegennimmt und daraus die Zustände (Z2) der von der Anlage (ANL) der Grundstoffindustrie erzeugten Ausgangsprodukte (Ai) und der zu erzeugenden Ausgangsprodukte (Ai) ermittelt und/oder vergangene und zukünftige Zustände (Z3) der Anlage (ANL) der Grundstoffindustrie als Ganzes ermittelt,
- wobei ein Wartungsplanungssystem (9) vom Zustandsüberwachungssystem (7) die bisherigen und die zukünftig erwarteten Zustände (Z1) der Komponenten der Anlage (ANL) der Grundstoffindustrie entgegennimmt und vom Qualitätsermittlungssystem (8) die Zustände (Z2) der von der Anlage (ANL) der Grundstoffindustrie erzeugten Ausgangsprodukte (Ai) und der zu erzeugenden Ausgangsprodukte (Ai) und/oder vergangene und zukünftige Zustände (Z3) der Anlage (ANL) der Grundstoffindustrie als Ganzes entgegennimmt und unter Berücksichtigung dieser Daten Wartungsplanungsdaten (W) für die Anlage (ANL) der Grundstoffindustrie ermittelt und/oder das Produktionsplanungssystem (6) vom Zustandsüberwachungssystem (7) die bisherigen und die zukünftig erwarteten Zustände (Z1) der Komponenten der Anlage (ANL) der Grundstoffindustrie entgegennimmt und vom Qualitätsermittlungssystem (8) die Zustände (Z2) der von der Anlage (ANL) der Grundstoffindustrie erzeugten Ausgangsprodukte (Ai) und der zu erzeugenden Ausgangsprodukte (Ai) und/oder vergangene und zukünftige Zustände (Z3) der Anlage (ANL) der Grundstoffindustrie als Ganzes entgegennimmt und bei der Ermittlung der Produktionsplanungsdaten (Pi) berücksichtigt.

2. Verfahren nach Anspruch 1,
**dadurch gekennzeichnet,**
**dass** das Wartungsplanungssystem (9) vom Produktionsplanungssystem (6) die Produktionsplanungsdaten (Pi) entgegennimmt und die Produktionsplanungsdaten (Pi) bei der Ermittlung der Wartungsplanungsdaten (W) berücksichtigt und/oder dass das Produktionsplanungssystem (6) vom Wartungsplanungssystem (9) die Wartungsplanungsdaten (W) entgegennimmt und die Wartungsplanungsdaten (W) bei der Ermittlung der Produktionsplanungsdaten (Pi) berücksichtigt.

3. Verfahren nach Anspruch 1 oder 2,
**dadurch gekennzeichnet,**
**dass** das Qualitätsermittlungssystem (8) unter Berücksichtigung der Produktionsplanungsdaten (Pi) und/oder der zukünftig erwarteten Zustände (Z1) der Komponenten der Anlage (ANL) der Grundstoffindustrie Grenzwerte (L1) für dynamische Einstellungen und/oder Grenzwerte (L2) für sich ergebende Zustände (Z1) der Komponenten der Anlage (ANL) der Grundstoffindustrie ermittelt und dass das Qualitätsermittlungssystem (8) die Grenzwerte (L1) für die dynamischen Einstellungen dem Automatisierungssystem (1) und/oder die Grenzwerte (L2) für die sich ergebenden Zustände (Z1) dem Zustandsüberwachungssystem (7) als einzuhaltende Grenzwerte vorgibt.

4. Verfahren nach Anspruch 3,
**dadurch gekennzeichnet,**
**dass** das Wartungsplanungssystem (9) die Wartungsplanungsdaten (W) an das Qualitätsermittlungssystem (8) übermittelt und dass das Qualitätsermittlungssystem (8) bei der Ermittlung der Grenzwerte (L1) für die dynamischen Einstellungen und/ oder die Grenzwerte (L2) für die sich ergebenden Zustände (Z1) auch die Wartungsplanungsdaten (W) berücksichtigt.

5. Verfahren nach einem der obigen Ansprüche,
**dadurch gekennzeichnet,**
**dass** das Verfahren zur Planung von Produktion und/oder Wartung von Anlagen (ANL) der Grundstoffindustrie automatisiert iterativ ausgeführt wird.

6. Verfahren nach Anspruch 5,
**dadurch gekennzeichnet,**
**dass** das Verfahren zur Planung von Produktion und/oder Wartung kontinuierlich ausgeführt wird oder dass es auf Anforderung durch eine Person (4) ausgeführt wird.

7. Verfahren nach einem der obigen Ansprüche,
**dadurch gekennzeichnet,**
**dass** das Qualitätsermittlungssystem (8) anhand des Zustands (Z2) eines der von der Anlage (ANL) der Grundstoffindustrie erzeugten Ausgangsprodukte (Ai) für eine weitere Anlage (ANL') der Grundstoffindustrie, der das erzeugte Ausgangsprodukt (Ai) als Eingangsprodukt (Ei') zugeführt wird und die damit ein weiterverarbeitetes Produkt (Ai') erzeugt, Schranken für die Behandlung dieses Ausgangsprodukts (Ai) in der weiteren Anlage (ANL') der Grundstoffindustrie ermittelt und die Schranken einem Automatisierungssystem oder einem Produktionsplanungssystem für die weitere Anlage (ANL') der Grundstoffindustrie vorgibt.

8. Verfahren nach Anspruch 7,
**dadurch gekennzeichnet,**
**dass** das Qualitätsermittlungssystem (8)
- anhand des Zustands (Z2) eines der von der Anlage (ANL) der Grundstoffindustrie erzeugten Ausgangsprodukte (Ai) prüft, ob dieses Ausgangsprodukt (Ai) für dieses Ausgangsprodukt (Ai) vordefinierte Qualitätsparameter einhält,
- bei Einhalten der vordefinierten Qualitätsparameter durch dieses Ausgangsprodukt (Ai) eine bereits geplante Weiterverarbeitung dieses Ausgangsprodukts (Ai) durch die weitere Anlage (ANL') der Grundstoffindustrie freigibt und
- bei Nichteinhalten der vordefinierten Qualitätsparameter durch dieses Ausgangsprodukt (Ai) zusätzlich zu den Schranken für die Behandlung dieses Ausgangsprodukts (Ai) in der weiteren Anlage (ANL') der Grundstoffindustrie unter Berücksichtigung der tatsächlichen Qualitätsparameter dieses Ausgangsprodukts (Ai) eine modifizierte Weiterverarbeitung durch die weitere Anlage (ANL') der Grundstoffindustrie ermittelt.

9. Verfahren nach Anspruch 8,
**dadurch gekennzeichnet,**
**dass** das Qualitätsermittlungssystem (8) die modifizierte Weiterverarbeitung an das Produktionsplanungssystem (6) übermittelt und dass das Produktionsplanungssystem (6) die modifizierte Weiterverarbeitung im Rahmen der Ermittlung der Produktionsplanungsdaten (Pi) berücksichtigt.

10. Verfahren nach einem der obigen Ansprüche,
**dadurch gekennzeichnet,**
**dass** das Qualitätsermittlungssystem (8) bei einer Abweichung des Zustands (Z2) eines der von der Anlage (ANL) der Grundstoffindustrie erzeugten Ausgangsprodukte (Ai) von einem erwarteten Zustand eine Analyse der Zustände (Z1) der Komponenten der Anlage (ANL) der Grundstoffindustrie und/oder von Betriebsparametern der Anlage (ANL) der Grundstoffindustrie im Sinne einer Ursachenauffindung für die Abweichung des Zustands (Z2) vom erwarteten Zustand durchführt.

11. Verfahren nach einem der obigen Ansprüche,
**dadurch gekennzeichnet,**
**dass** das Zustandsüberwachungssystem (7) bei Erreichen von Grenzwerten (L2) durch die bisherigen oder zukünftig erwarteten Zustände (Z1) der Komponenten der Anlage (ANL) der Grundstoffindustrie entsprechende Meldungen an das Wartungsplanungssystem (9) übermittelt und dass die Grenzwerte (L2) unter Berücksichtigung der Produktionsplanungsdaten (Pi) ermittelt werden.

12. Verfahren nach einem der obigen Ansprüche,
**dadurch gekennzeichnet,**
**dass** das Produktionsplanungssystem (6) die Produktionsplanungsdaten (Pi) mit dem Ziel optimiert, eine Betriebszeit der Anlage (ANL) der Grundstoffindustrie zu maximieren.

13. System zur Planung von Produktion und/oder Wartung von Anlagen (ANL) der Grundstoffindustrie,
- wobei die Anlage (ANL) der Grundstoffindustrie von einem Automatisierungssystem (1) gesteuert wird und unter Steuerung durch das Automatisierungssystem (1) eine Abfolge von Produktionsaufträgen abarbeitet, wobei die Anlage (ANL) der Grundstoffindustrie pro Produktionsauftrag aus einer Anzahl von Eingangsprodukten (Ei) eine Anzahl von Ausgangsprodukten (Ai) erzeugt,
- wobei das System ein Produktionsplanungssystem (6), ein Zustandsüberwachungssystem (7), ein von dem Automatisierungssystem (1) verschiedenes Qualitätsermittlungssystem (8) und ein Wartungsplanungssystem (9) aufweist,
- wobei das Produktionsplanungssystem (6), das Zustandsüberwachungssystem (7), das Qualitätsermittlungssystem (8) und das Wartungsplanungssystem (9) derart programmiert sind, dass sie zusammen ein Verfahren zur Planung von Produktion und/oder Wartung von Anlagen (ANL) der Grundstoffindustrie nach einem der obigen Ansprüche ausführen.
